# FASCICULE DE BREVET EUROPEEN

(11) **EP 1 862 528 B1**
(45) Date de publication et mention de la délivrance du brevet: **26.10.2011**
(21) Numéro de dépôt: 07290583.9
(22) Date de dépôt: 07.05.2007
(51) Int. Cl.: C10G 50/00, C07C 1/20, C07C 2/04, C10L 1/08, B01J 35/10, B01J 21/04, B01J 21/08, B01J 21/12, B01J 23/44, B01J 23/755, B01J 38/02, C07C 5/02

(54) **Procédé de transformation de l'éthanol en base pour carburant diesel**
Verfahren zur Umwandlung von Ethanol in eine Komponente für Dieselkraftstoff
Process for transforming ethanol in a base for diesel fuel

(30) Priorité: 30.05.2006 FR 0604928
(43) Date de publication de la demande: 05.12.2007
(73) Titulaire: IFP Energies nouvelles, 92852 Rueil-Malmaison Cedex (FR)
(72) Inventeur: Coupard, Vincent, 69120 Vaulx en Velin (FR); Maury, Sylvie, 69390 Charly (FR); Capuano, Frédéric, 69440 Saint Maurice d'Argoire (FR); Bengrine, Mohamed, 71100 Chalon sur Saone (FR)

(56) Documents cités:
- EP-A- 0 022 640
- EP-A- 1 410 844
- US-A- 4 467 133
- US-A- 5 063 187
- STOCKER M: "Methanol-to-hydrocarbons: catalytic materials and their behavior" MICROPOROUS AND MESOPOROUS MATERIALS, ELSEVIER SCIENCE PUBLISHING, NEW YORK, US, vol. 29, no. 1-2, juin 1999 (1999-06), pages 3-48, XP004167548 ISSN: 1387-1811
- WITHCRAFT, DAVID R. ; VERYKLOS, XENOPHON E. ; MUTHARASAN, RAJAKKANNU: "Recovery of ethanol frm fermentation broths by catalytic conversion to gasoline" INDUSTRIAL AND ENGINEERING CHEMISTRY PROCESS DESIGN AND DEVELOPMENT, vol. 22, 1983, pages 452-457, XP002418576

## Description

### Domaine de l'invention

La présente invention concerne la transformation de l'éthanol en base pour carburant diesel.

Elle concerne plus particulièrement un procédé catalytique de transformation de l'éthanol, pur ou contenant de l'eau, en base pour carburant diesel.

### État de l'art

La demande pour une utilisation de la biomasse en remplacement partiel des ressources pétrolières pour la synthèse de carburants va croissant. Aussi l'utilisation de bioéthanol pour la synthèse de bases pour carburants reçoit-elle un intérêt de plus en plus marqué. La production d'hydrocarbures liquides sur des solides acides a été mentionnée par quelques auteurs lors de réactions de conversion de l'éthanol (H. Van Bekkum et al., Applied Catalysis, 3 (1982)). Cependant, ceux-ci ne se sont pas intéressés à l'optimisation du rendement en gazole**.**

La réaction à la base du procédé de transformation de l'éthanol en base pour carburant diesel est la déshydratation-oligomérisation en une étape de l'éthanol selon l'équation (1) ci-dessous :

2 C₂H₅OH → 2CH₂=CH₂ + 2 H₂O → oligomérisation/cyclisation (aromatiques, paraffines, oléfines, etc.) (1)

On sait que la déshydratation de l'éthanol a lieu assez aisément sur des solides acides de faible acidité à des températures supérieures à 300°C et à pression atmosphérique. Les produits de la réaction sont alors principalement l'eau et l'éthylène, l'éthylène étant obtenu avec une sélectivité supérieure à 96 %. Les catalyseurs les plus couramment utilisés sont des silices-alumines, des zéolithes non traitées (ZSM-5) ou modifiées par "steaming" ou dérivées de l'amiante. L'utilisation d'une ZSM-5 traitée à l'acide triflique (R. Le Van Mao et al., The Bioethanot-to-Ethytene (B.E.T.E.) Process, Applied Catalysis, 48 (1989)), ou encore un silicate de niobium microporeux AM-11 (P. Brandao et al., Dehydration of Alcohols by Microporous Niobium Silicate AM-11, Catalysis Letters, 80, 3-4 (2002)) ont également été mentionnées dans l'art antérieur. Une étude relativement ancienne mentionne la production d'aromatiques à hauteur de 50 % à partir d'éthanol sur ZSM-5 à des températures supérieures à 260°C. Pour des températures inférieures, seule la formation d'éthylène est mentionnée. La présence d'eau dans la charge éthanol semble favoriser la formation d'aromatiques, en opposition avec les conclusions de A.T. Aguayo et al. (J. Chem. Technol. and Biotechnol., 77 (2002)). La présence d'eau aurait aussi pour effet la limitation de la désactivation du catalyseur. Par contre, pour des températures supérieures à 450°C, on risque de désaluminer le catalyseur.

L'oligomérisation de l'éthylène, quant à elle, nécessite de travailler à pression élevée, en général entre 2 et 4 MPa , mais à des températures plus douces, en général entre 20 et 200°C. Les catalyseurs utilisés sont alors souvent des métaux de transition déposés sur supports de type silice-alumine, zéolithes (ZSM-5) ou solides mésoporeux (MCM-41) comme décrit par V. Hulea et al., J. Catal., 225 (2004).

Rares sont les auteurs qui ont rapporté la déshydratation-oligomérisation de l'éthanol en une seule étape. Les quelques études mentionnées (S. Sivasanker et al., J. Assam Science Society, 36(3), (1994) ou D.R. Whitcraft et al., Ind. Eng. Chem. Process Dev., 22, (1983) ont ainsi montré la production de coupe essence par réaction de l'éthanol à pression et température élevées sur ZSM-5. Cependant, les rendements obtenus sont assez faibles et la coupe lourde (T_{ébullition} > 220°C) représente un pourcentage peu élevé (< 3 %) ; la formation d'aromatiques est mentionnée : elle est fonction de la pression et du rapport Si/AI de la zéolithe. Des études cinétiques poussées concernant la conversion de l'éthanol aqueux sur zéolithes H-ZSM-5 en hydrocarbures ont été menées par A.T. Aguayo et al. précédemment cité. Cependant, les réactions ont lieu à pression atmosphérique et à température élevée ; les produits obtenus ne sont pas détaillés, mais ils sont de faibles masses moléculaires (C5+).

La réaction de transformation de l'éthanol pour produire des hydrocarbures (déshydratation-oligomérisation en une étape) a été étudiée principalement sur la zéolithe ZSM-5 (M.M. Chang et al., "The Conversion of Methanol and Other O-Compounds to Hydrocarbons over Zeolite Catalysts", J.Catal. 47, 249-259). L'objectif premier étant de produire des effluents de type essence, mais aucun auteur ne s'est attaché à optimiser le rendement en hydrocarbures liquides de point d'ébullition supérieur à 150°C.

K.G. Bhattacharyya et al. ("Production of Hydrocarbons from Aqueous Ethanol over HZM-5 under High Pressure"). Journal of Assam Science Society 36(3), pp 177-188 (1994) sont les seuls à s'être intéressés aux résultats en terme de production de coupe diesel. Cependant, ils n'ont pas cherché à optimiser les conditions opératoires, ni le catalyseur. Les tests ont été effectués à 3 MPa et 400°C sur une H-ZSM-5 de rapport Si/AI 103, soit d'acidité relativement faible. La fraction de coupe diesel (270-370°C) obtenue est alors seulement de 0,6 %. Les conditions opératoires varient beaucoup d'une étude à l'autre, mais, de manière générale, la pression favorise la formation de produits liquides (> C5+), des températures supérieures à 350°C favorisent l'oligomérisation de l'éthylène produit primaire de la réaction de l'éthanol à partir de 300°C. Au-delà de 350°C, la formation d'aromatiques devient importante notamment sur H-ZSM-5. Ce catalyseur est de loin le plus stable de toutes les zéolithes étudiées (mordénite, Y ou béta).

L'ajout de métaux par échange ionique a été étudié par J.F. Schulz et al. ("Conversion of Ethanol over Metal-exchanged Zeolites", Chem.Eng.Technol. 16 (1993) 332-337), qui ont montré l'influence du nickel sur la formation d'aromatiques. D'après eux, l'ajout de ce métal permet de stabiliser les sites aluminium des zéolithes, évitant ainsi la perte de cristallinité. Un rapport Si/AI faible du catalyseur favorise la formation d'aromatiques. Pour Valle B. et al. ("Effect of Nickel Incorporation on the Acidity and Stability of HZSM-5 Zeolite in the MTO Process", Catalysis Today 106 (2005) 118-122) dans le cas du procédé "Methanol to Olefins", qui requiert une température élevée et qui a lieu en présence d'une quantité d'eau importante, l'ajout de nickel par imprégnation permet de stabiliser la zéolithe H-ZSM-5. La présence de nickel fait chuter l'acidité du catalyseur (force et nombre). Cependant, une teneur en nickel de 1 % permet de rendre le catalyseur régénérable sans perte d'activité, contrairement au solide parent qui se désactive. Machado et al. ("Obtaining Hydrocrabons from Ethanol over Iron-modified ZSM-5 Zeolites", Fuel 84, 2064-2070) ont modifié une ZSM-5 de Si/AI = 20 (préalablement échangée pour obtenir la forme protonique) par imprégnation avec Fe(NO₃)₃, 9H₂O ou par échange ionique avec FeCl₃, 6H₂O.

La zéolithe ZSM-5 est considérée comme microporeuse puisque la majorité de ses pores ont une taille inférieure à 20 A.

D'autre part, quelques auteurs ont comparé les mécanismes de déshydratation et d'oligomérisation de l'éthanol à ceux du méthanol. Derouane et al (J. Catal, 53, 40-55 (1978)) notamment ont montré que le comportement de ces deux alcools dans la réaction de transformation sur solides acides était différents. Ainsi, dans des conditions identiques, à 250°C, l'éthanol se convertit à plus de 98% en éthylène alors que le produit principal détecté à partir du méthanol (à 74%) est du diméthyl éther. Espinoza et al (App. Catal, 6, 11-26 (1983)), quant à eux, mettent en évidence la formation d'éthylène à 93% à partir d'éthanol à 380°C et de C5+ à 49% à partir du méthanol.
Le mécanisme est, de façon évidente, différent pour les deux alcools : en effet, le méthanol doit d'abord réagir sur lui-même pour former du diméthyléther en éliminant une première molécule d'eau, puis l'élimination d'une seconde molécule d'eau permet d'obtenir l'éthylène qui peut ensuite croître via la formation d'un éther plus long, (par ajout d'un groupement méthoxy sur un carbocation en C₂ conduisant ainsi à la formation de propylène), soit par réaction avec une autre molécule d'éthylène.
Au-delà de 300°C, la transformation de l'éthanol quant à elle passe majoritairement par la formation d'éthylène (produit directement par déshydratation intramoléculaire de l'alcool ou via le diéthyl éther), la croissance de chaîne se fait alors via des intermédiaires carbocationiques (formation de chaînes paires).

En conclusion, l'état de l'art au niveau des demandes de brevet sur un procédé permettant la conversion de l'éthanol en base pour carburant diesel par une voie de déshydratation-oligomérisation en une étape, ne contient aucune antériorité pertinente. La littérature scientifique s'est essentiellement intéressée à la transformation de l'éthanol en base aromatique, la fraction diesel obtenue ne dépassant pas les 1 % en masse.

### Objet de l'invention

Un objectif du procédé de l'invention est de transformer des charges d'éthanol, éventuellement produites par voie biologique, majoritairement en bases hydrocarbures qui puissent être mélangées dans le "pool diesel" en une seule étape réactionnelle, sans problèmes de stabilité, ni nécessité d'ajouter des compatibilisants pour réaliser des mélanges homogènes.

Un autre objectif de l'invention est de conserver tous les produits de la réaction aux différentes étapes de la réaction, sans procéder à un changement des conditions opératoires pour séparer la phase aqueuse. L'eau formée lors de l'étape de déshydratation doit pouvoir rester sous forme de gaz dans le (ou les) réacteur(s) utilisé(s), sans condenser sous forme liquide entre les étapes de déshydratation et d'oligomérisation. Ainsi, même si plusieurs réacteurs sont utilisés, un des intérêts de l'invention est de ne faire appel à aucune décantation de l'eau entre les différents réacteurs, et réaliser ainsi la transformation la plus complète possible de l'éthanol en base pour gazole, en conservant l'eau formée par la réaction sous forme gazeuse.

Il a été trouvé de manière inattendue que, contrairement à ce que laisse supposer l'état de l'art, les catalyseurs permettant la transformation de l'éthanol en base pour carburant diesel sont des catalyseurs d'acidité modérée.

### Description sommaire de l'invention

Le procédé de l'invention peut être défini comme un procédé de transformation de l'éthanol en base pour carburant diesel comprenant :
- une seule étape réactionnelle (a) de mise en contact de l'éthanol avec un catalyseur acide, amorphe ou structuré, majoritairement mésoporeux, c'est-à-dire comprenant au moins 60% de pores de taille comprise entre 2 et 50 nm, choisi dans le groupe formé par les alumines delta, gamma et êta et les silices-alumines, menée à une température de 300 à 500°C, sous une pression de 2 à 10 MPa et sous une pph de 0,2 à 4 h⁻¹ et produisant une phase gazeuse, une phase liquide organique et une phase liquide aqueuse ; et
- une étape de séparation (b) de ladite phase gazeuse, ladite phase liquide organique et ladite phase liquide aqueuse.

Selon l'invention, on a pu, de manière inattendue, trouver différents catalyseurs, d'acidité variable, amorphes ou structurés, majoritairement mésoporeux, permettant de réaliser la transformation de l'éthanol en base pour carburant diesel en une seule étape réactionnelle.

On entend par mésoporosité une gamme de taille de pores s'étendant de 2 à 50 nm. La mesure de cette porosité se fait par volume d'intrusion mercure ou azote. Un composé majoritairement mésoporeux selon l'invention comprend au moins 60% de mésopores et de préférence au moins 70% de mésopores.

### Brève description des figures

La Figure 1 représente schématiquement le procédé de déshydratation-oligomérisation de la présente invention dans sa version directe, sans recyclage.
La Figure 2 représente schématiquement une variante du procédé de l'invention, incluant une étape de recyclage d'au moins une partie de la phase gazeuse séparée après réaction de déshydratation-oligomérisation.
La Figure 3 représente schématiquement une variante du procédé de l'invention incluant l'hydrogénation d'au moins une partie de la phase liquide organique séparée après réaction de déshydratation-oligomérisation.
La Figure 4 représente une courbe de distillation simulée des recettes organiques correspondants aux bilans réalisés dans l'Exemple 2 selon l'invention.

### Description détaillée de l'invention

Le procédé de l'invention s'adresse à des charges d'éthanol diverses, éventuellement produites par voie biologique, contenant des quantités variables d'eau. A titre indicatif, le Tableau 1 ci-dessous donne des compositions classiques des lots d'éthanol utilisables comme charges du procédé de l'invention.

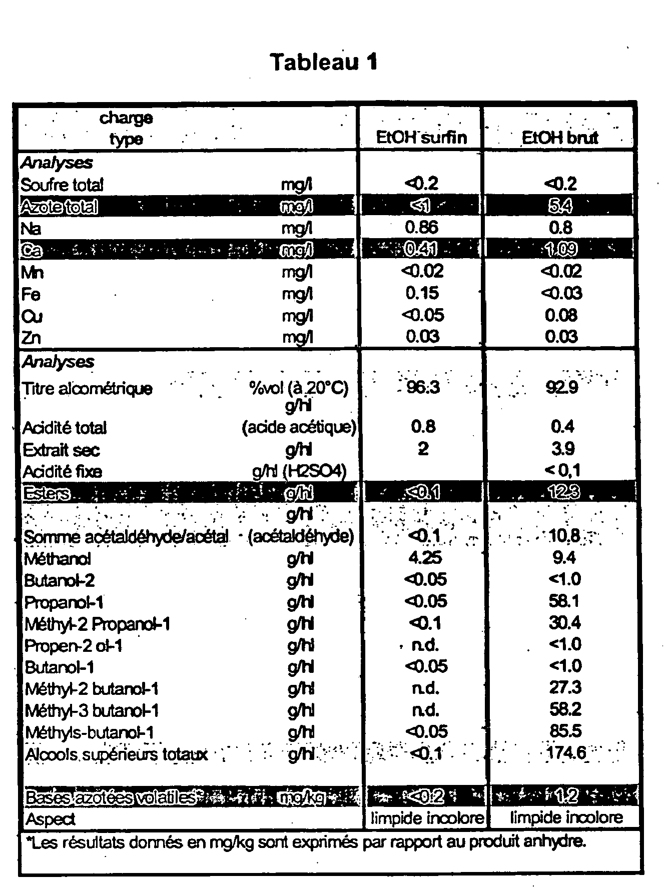

Dans l'étape réactionnelle (a) de déshydratation-oligomérisation du procédé de l'invention, le catalyseur est en général choisi parmi les alumines delta, gamma et êta, méso- et macroporeuses, avec une majorité de mésopores, ainsi que les silices-alumines.

On peut utiliser plus particulièrement les alumines gamma ou delta, réalisées par granulation ou extrusion répondant aux critères de surface externe comprise entre 130 et 350 m²/g et de volume poreux, mesuré par l'intrusion au mercure, situé entre 0,3 et 1,2 cm³/g. De l'alumine, par exemple de l'alumine gamma, mise en forme par le procédé "Oil Drop", est préférée. On citera le catalyseur IS463, commercialisé par la société Axens (anciennement Procatalyse), comme un bon catalyseur pour cette transformation. Il s'agit d'un catalyseur de type alumine gamma, possédant une surface externe d'environ 200 m²/g et de volume poreux de 0,59 cm³/g. Un procédé possible de mise en forme de ces billes est décrit dans les brevets GB-B-2134536 et EP-B-015801 et EP-B-097539.

Ces solides peuvent ensuite être traités par de la silice pour devenir des silices-alumines amorphes, car ce procédé est connu par l'homme du métier pour augmenter la stabilité hydrothermale des catalyseurs. Le brevet US-A-5545793 décrit le mode de préparation d'un tel solide.

Enfin, des silices-alumines amorphes ayant un taux de silice entre 10 et 90 % en masse et possédant une surface externe de l'ordre de 200 à 480 m²/g (mesure SBET) présentent une bonne résistance à la pression partielle d'eau générée par la réaction de déshydratation initiale. On citera par exemple la silice-alumine Siralox 30 commercialisée par la société Condea comme un solide utilisable sur l'application visée. La porosité, mesurée par l'intrusion au mercure, d'un solide de ce type est comprise entre 0,5 et 1,5 cm³/g. Également dans le cas des silices-alumines, on utilisera celles dont la distribution de taille de pores montre la présence de mésopores et de macropores, avec une majorité de mésopores.

Dans l'étape (a) du procédé de l'invention, le catalyseur est en général mis en contact avec l'éthanol frais aux conditions de réaction, en général à une température comprise entre 300°C et 500°C et sous une pression totale absolue comprise entre 2 à 10 MPa, la vitesse pondérale horaire d'introduction pph de la charge d'éthanol sur le catalyseur étant en général de 0,2 à 4 h-¹(vitesse pondérale horaire, c'est-à-dire poids de charge par poids de catalyseur et par heure).

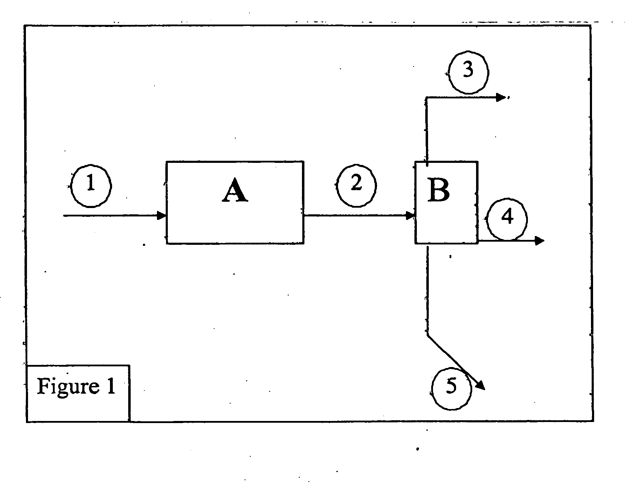

On décrit ci-après le procédé selon l'invention, dans sa première variante, en liaison avec la Figure 1.

La charge (1) contient de l'éthanol et de l'eau, avec une proportion d'éthanol d'au moins 40 % en masse. Une charge contenant au moins 90% en masse d'éthanol est préférée. Cette charge est portée aux conditions réactionnelles par un ensemble de pompes, d'échangeurs de chaleur et de fours jusqu'au réacteur A (non représentés sur la Figure 1).

Comme réacteur A, on choisit avantageusement un réacteur à lit radial, afin de minimiser la perte de charge au travers du lit catalytique. On peut utiliser un ou plusieurs réacteurs. On peut utiliser un réacteur avec un ou plusieurs lits fixes ou un réacteur avec un ou plusieurs lits mobiles, couplés à un système de régénération en continu. On utilisera de préférence deux réacteurs en lit fixe radial avec un jeu de vannes permettant une permutation entre une phase de test et une phase de régénération.

On notera que la réaction étant globalement exothermique, un système d'échange de chaleur connu par l'homme du métier permet de minimiser la consommation d'énergie en marche normale.

La régénération du catalyseur est en général réalisée sous flux d'air. On peut utiliser une recirculation de l'air de combustion avec ou sans eau afin de diluer l'oxygène et maîtriser l'exothermie de régénération. On ajustera dans ce cas la teneur en oxygène en entrée du réacteur par un appoint d'air. La régénération a lieu à pression entre la pression atmosphérique (0 MPa relatif) et la pression de réaction. La température de régénération est choisie entre 400 et 600°C ; elle peut être variée en cours de régénération. La fin de la régénération est détectée quand il n'y a plus de consommation d'oxygène.

En sortie de réacteur A, l'effluent de réaction (2) est conservé à sa pression de réaction, aux pertes de charge dans les équipements traversés près. L'effluent est refroidi en dessous du point de rosée de l'eau. On provoque ainsi simultanément une condensation d'un liquide organique. On l'introduit dans un dispositif B permettant la séparation triphasique d'une phase gazeuse (3) constituée notamment d'éthylène, d'un liquide organique (4) (essence et gazole) et d'un liquide aqueux (5) (eau, éthanol non réagi, hydrocarbures solubilisés). Typiquement, ce séparateur B peut être un ballon séparateur contenant des internes de type déflecteurs ou baffles ou dévésiculeurs permettant de minimiser le volume nécessaire à la décantation liquide organique-liquide aqueux, d'une part, et la décantation liquide organique-gaz organique, d'autre part. Le temps de séjour dans cet interne est avantageusement supérieur à 1 minute afin de permettre ces séparations de phases. La température du séparateur est en général choisie de manière à récupérer au moins 80 % de la fraction gazole produite dans la réaction. Elle peut être par exemple de 60 à 200°C, pour une pression d'environ 3 MPa.

La phase aqueuse (5) en sortie du séparateur est majoritairement constituée d'eau et d'hydrocarbures solubilisés. Avant son rejet, par exemple pour arrosage agricole, cette phase aqueuse sera traitée, l'huile séparée étant récupérée par exemple dans les camions ayant servi à apporter l'éthanol sur le site de transformation.

Le liquide organique (4) contient moins de 20% en poids de composés aromatiques.

### Mise en oeuvre avec recyclage

Au niveau des définitions, l'homme du métier a coutume de désigner le "pool diesel" comme un ensemble d'hydrocarbures dont le point d'ébullition peut varier entre 150°C et 370°C. Il est connu de l'homme du métier que le gazole est caractérisé essentiellement, en plus de sa volatilité, par son indice de cétane. Il est également connu que l'indice de cétane est favorisé par les hydrocarbures linéaires ayant un faible taux de branchement, défavorisé par les aromatiques et les chaînes très ramifiées, et enfin très défavorisé par les hydrocarbures contenant plusieurs noyaux aromatiques, éventuellement adjacents (comme le naphtalène).

Ces définitions étant ainsi rappelées, leur incidence au niveau de l'invention est que l'on cherche à réaliser une transformation par oligomérisation successive de l'éthylène et / ou addition d'un éthylène sur un hydrocarbure présent dans le réacteur. Ce mode d'oligomérisation a l'avantage de créer des produits majoritairement linéaires, donc a priori de bon cétane, si l'intervalle de distillation visé de 150 à 370°C est atteint. Malheureusement, des réactions de dégradation du produit existent également. Ces réactions sont essentiellement des réactions de transfert d'hydrogène, qui dégradent les chaînes oléfiniques formées en cycles naphténiques, puis aromatiques. II existe également les réactions d'isomérisation du squelette des hydrocarbures linéaires en iso-oléfines et des réactions de craquage, qui limitent la croissance des chaînes hydrocarbonées.

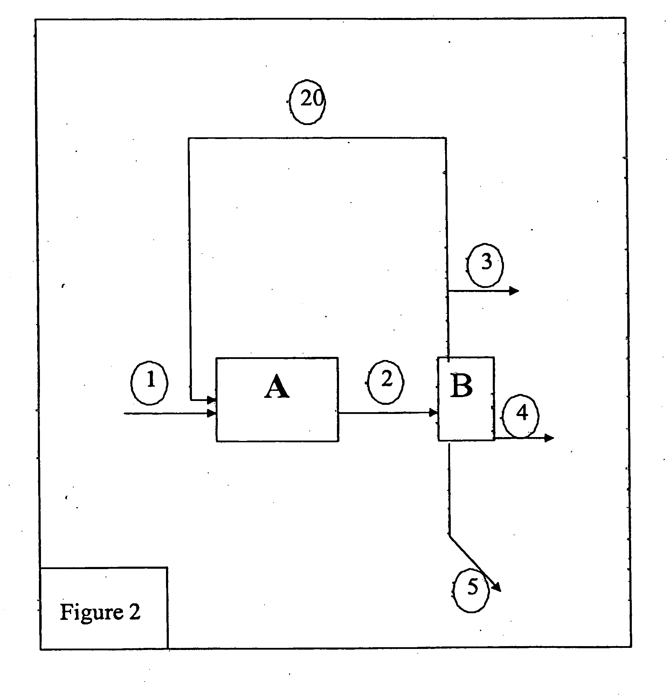

C'est pourquoi, dans une variante du procédé de l'invention, représentée schématiquement à la Figure 2, on envisage de mettre en oeuvre un recyclage de la phase gazeuse séparée vers l'entrée de l'éthanol à la réaction de déshydratation-oligomérisation, ce recyclage ayant pour objet de réaliser pratiquement la croissance des hydrocarbures oléfiniques qui n'ont pas encore atteint la volatilité désirée.

Le catalyseur est alors mis en contact avec l'éthanol frais additionné d'un recycle de produits non désirés provenant du procédé, le recyclage ayant pour objectif de finir la conversion, essentiellement au niveau de la volatilité des produits formés. Ainsi, l'essence du procédé recyclée est à nouveau oligomérisée dans le réacteur, ou additionnée par l'éthylène issu de la déshydratation de l'éthanol frais. Le point d'ébullition global de produit formé est ainsi sensiblement augmenté. On peut effectuer plusieurs recyclages successifs de manière à alourdir cette essence suffisamment pour la rendre compatible en point d'ébullition avec le "pool diesel".

Dans cette variante, on peut régler la température du séparateur afin de recycler le maximum de non-convertis en diesel jusqu'à la fraction légère de l'essence.

Le taux de recycle est imposé par la température. Une fois, la température fixée, une partie des produits est revaporisée et l'autre partie est purgée.

Le recyclage peut être réalisé après simple évaporation de la fraction légère du produit. Cette évaporation peut être réalisée dans une enveloppe provoquant un temps de séjour des produits supérieurs 1 minute, la phase vapeur étant ainsi séparée de la phase liquide organique et de la phase liquide aqueuse.

Afin de ne pas accumuler les inertes qui se créent dans le procédé par transfert d'hydrogène sur l'éthylène, formant ainsi de l'éthane, on purge une partie des gaz, en général de 1 à 30 % en masse, le plus souvent au plus 10 % en masse. Cette purge (3) contient majoritairement de l'éthylène, ainsi que du CO, du CO₂ du CH₄ et de l'hydrogène et des traces d'eau. Elle peut avantageusement servir de combustible dans les fours du procédé.

Le reste, en général de 70 à 99 % en masse, le plus souvent au moins 90% en masse, est recyclé en entrée du réacteur (flux 20). Cette fraction de la phase gazeuse subit en général une recompression avant d'être réinjectée à l'étape (a) en mélange avec l'éthanol frais.

Une partie de l'éthanol est également déshydrogénée en acétaldéhyde, produit non stable aux conditions de réaction. Ce produit se décompose alors en CO, CO₂ CH₄ et H₂.

### Mise en oeuvre avec hydrogénation

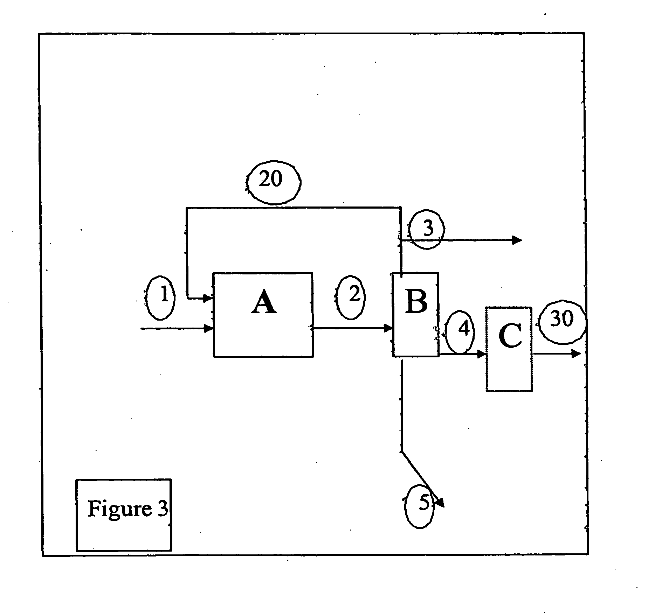

Dans une autre variante avantageuse du procédé de l'invention, au niveau des produits liquides réalisés, la coupe liquide organique (4), obtenue par le procédé avec ou sans recyclage, peut être conduite à une hydrogénation des oléfines restantes, afin de réaliser un gain de cétane. Cette variante est représentée schématiquement sur la Figure 3.

Tout ou partie de l'effluent liquide (4) est mis en contact, dans une zone réactionnelle C, avec un gaz riche en hydrogène sur un catalyseur contenant par exemple un métal du groupe VIII, qui peut être du palladium ou nickel, sur un support de type alumine ou silice ou silice-alumine, afin de réaliser l'hydrogénation des dioléfines et/ou l'hydroisomérisation et/ou l'hydrogénation des oléfines.

La teneur en métal va en général de 0,1 à 10 % en masse dans le cas du palladium et de 1 à 60 % en masse pour le nickel. Les conditions de mise en oeuvre de cette hydrogénation en phase liquide incluent en général des WH (vitesse volumique horaire) de 1 à 8 h⁻¹, une température entre 100 et 250°C en entrée du réacteur et une pression opératoire entre 2 et 5 MPa. On valide la performance de l'hydrogénation par une mesure du nombre de brome qui est avantageusement d'au plus 1 g Br/100g, dans le cas ou l'on souhaite saturer l'ensemble des composés insaturés présents dans la coupe.

L'effluent (30) de la zone réactionnelle C contient majoritairement des hydrocarbures qui, de par leur intervalle d'ébullition, peuvent être incorporés dans le "pool diesel". Il peut être utilisé directement dans le diesel commercial ou fractionné en une coupe essence lourde et/ou une coupe kérosène et /ou une coupe gazole avant mélange dans le "pool diesel".

Les exemples suivants illustrent l'invention. Ils ne doivent en aucune manière être considérés comme limitatifs. L'Exemple 1 est donné à titre de comparaison.

La charge d'éthanol traitée dans ces exemples est un éthanol industriel à 93 % de titre alcoolique.

### Exemple 1 (comparaison)

On charge une unité pilote en lit traversé avec un mélange de 50 % en masse d'alumine et de 50 % en masse de zéolithe Y, mis en forme d'extrudés (le catalyseur est désigné par USY et est considéré comme microporeux). On utilise 75 g de catalyseur.

Avant le test proprement dit, on a procédé à l'activation du solide à 550°C sous air durant 2 h. Cette activation consiste en une calcination visant à la combustion des traces d'huile, de graisse et au séchage du catalyseur avant son utilisation.

On injecte 75 g/h d'éthanol sur ce catalyseur, avec une dilution à l'azote (azote d'entrée et de sortie ôté du calcul de bilan) de 40NI/h. A la sortie du réacteur, on procède à la séparation de la phase gaz, de la phase liquide organique et de la phase liquide aqueuse. Le test dure 50 h. On ne pratique pas de recyclage. Les conditions de réaction utilisées sont les suivantes : une température de 400°C, le réacteur étant isotherme, et une pression de 3 MPa.

On effectue différents bilans au cours du test. Les bilans massiques présentés ont été corrigés de l'eau présente avec la charge (eau retirée dans les charges et les produits). Ces bilans sont réalisés sur une durée de 8 à 12 h, se terminant au temps indiqué dans la ligne "temps sous charge".

Le bilan matière est donné dans le Tableau 2 ci-dessous.

**Tableau 2**

| **Test USY (3 MPa)** | | | **Bilan 1** | **Bilan 2** | **Bilan 3** | **Bilan 4** |
|---|---|---|---|---|---|---|
| Temps sous charge (heures) | | | 8 | 16 | 24 | 32 |
| **Charge** | EtOH | Masse | 100 | 100 | 100 | 100 |
| | Eau éthanol retirée charge - produit | | | | | |
| **Phase Aqueuse** | | | | | | |
| | **Total recette aqueuse** | | **43,8** | **45,4** | **50,7** | **46,8** |
| **Phase Organique** | | | | | | |
| | **Total recette organique** | | **0** | 1 **2,8** | **0** | **4,3** |
| **Phase Gaz** | | | | | | |
| | Hydrocarbure gaz | | 56,7 | 49,9 | 45,5 | 46,5 |
| | H2 | | 0,3 , | 0,4 | 0,4 | 0,4 |
| | CO | | 0,6 | 0,8 | 0,8 | 0,8 |
| | CO2 | | 0,3 | 0,2 | 0,1 | 0,1 |
| | **Total Phase Gaz** | | **57,9** | **51,3** | **46,8** | **47,8** |
| **Total** | | | **101,7** | **99,5** | **97,5** | **98,9** |

Le bilan massique expérimental montre que la phase liquide hydrocarbure produite est en faible quantité, même si la déshydratation de l'éthanol est complète.

La partie hydrocarbure de la phase gaz contient majoritairement de l'éthylène et de l'éthane, ainsi que des traces d'hydrocarbures en C1, C3, C4 et C5 et de faibles quantités de CO, de CO₂ et d'hydrogène.

Le liquide organique formé contient des hydrocarbures dont le point d'ébullition varie entre 20 et 400°C. La fraction en gazole contenue dans ce produit est de 50 % en masse.

### Exemple 2 (selon l'invention)

On charge une unité pilote en lit traversé avec un solide commercial nommé IS463, commercialisé par la société Axens, anciennement Procatalyse (également désigné par sa dénomination interne : GOD200). On utilise 75g de catalyseur de type alumine gamma avec une surface externe de 200 m²/g et un volume poreux de 0,59 cm³/g. Ce catalyseur est un catalyseur acide, majoritairement mésoporeux.

Avant le test proprement dit, on a procédé à l'activation du solide à 550°C sous air durant 2 h. Cette activation consiste en une calcination, qui vise à la combustion des traces d'huile, de graisse et au séchage du catalyseur avant son utilisation.

On injecte 75 g/h d'éthanol sur ce catalyseur, avec une dilution à l'azote (azote d'entrée et de sortie ôté du calcul de bilan) de 40Nl/h. A la sortie du réacteur, on procède à la séparation de la phase gaz, de la phase liquide organique et de la phase liquide aqueuse. On ne pratique pas de recyclage. Les conditions de réaction mises en jeu sont : une température de 400°C, le réacteur étant isotherme, et une pression de 3 MPa.

La durée du test, de 96h 30, a permis d'effectuer 12 bilans. Des analyses sur les recettes aqueuses et organiques ont été effectuées sur les bilans 2, 5, 7, 9 et 12.

On donne dans le Tableau 2 ci-dessous le bilan matière obtenu dans cet exemple.

**Tableau 3**

| **Test GOD200 (400°C-3 MPa)** | **Bilan 2** | **Bilan 5** | **Bilan 7** | **Bilan 9** | **Bilan 12** |
|---|---|---|---|---|---|
| **EtOH** | 100 | 100 | 100 | 100 | 1OO |
| **Phase aqueuse:** | | | | | |
| Eau | 33,6 | 35,0 | 36,4 | 35,1 | 33,8 |
| HC recette aqueuse | 1,8 | 2,4 | 3,6 | 5.5 | 10,3 |
| **Total recette aqueuse** | **35,4** | **37,4** | **40,0** | **40,6** | **44,1** |
| **Recette organique** | **18,4** | **17,0** | **11,8** | **8,1** | **5,2** |
| **Phase gaz** | | | | | |
| HC gaz | 38,6 | 40,7 | 46,9 | 48,9 | 48,9 |
| H2 | 0,9 | 0,8 | 0,6 | 0,5 | 0,4 |
| CO | 2,0 | 2,0 | 1,2 | D,9 | 0,6 |
| CO2 | 0,9 | 0,9 | 0,7 | 0,5 | 0,3 |
| **Total phase gaz** | **42,4** | **44,4** | **49,4** | **50,8** | **50,2** |
| **Total** | 96,2 | 98,8 | 101,2 | 99,5 | 99,5 |

Les analyses des phases aqueuses et organiques indiquent la nature des composés formés.

Les quantités de phase organique liquide produite sont nettement plus importantes que celles obtenues avec un catalyseur de type USY microporeux.

Dans la recette organique, les composés oléfiniques sont majoritaires (en moyenne environ 50 % en masse) et les oléfines en C6 représentent la majorité des oléfines. On trouve aussi des C4 et quelques C8. De façon surprenante, 40 % de la fraction hydrocarbure a une température d'ébullition supérieure à 150°C, donc compatible avec le "pool diesel". Cette fraction est constante sur l'ensemble du test. La phase liquide organique contient en outre environ 15 % d'aromatiques.

La partie hydrocarbure de la phase gaz contient majoritairement de l'éthylène et de l'éthane, ainsi que des traces d'hydrocarbures en C1, C3, C4 et C5 et de faibles quantités de CO, de CO₂ et d'hydrogène.

Une façon de rendre compte de la qualité des produits synthétisés par le processus décrit dans l'exemple ci dessus est de s'intéresser à la courbe de distillation simulée de ces produits. La distillation simulée est une méthode connue de l'homme de l'art qui s'apparente à l'essai de distillation ASTM tel que décrit par exemple dans Raffinage et génie chimique, P.Wuithier, Edition Technip (1965), Tome I, p 7 et décrite dans des articles de la littérature Oil & Gas Science and Technology - Rev. IFP, Vol. 62 (2007), No. 1, pp. 33-42, Oil & Gas Science and Technology - Rev. IFP, Vol. 54 (1999), No. 4, pp. 431-438."

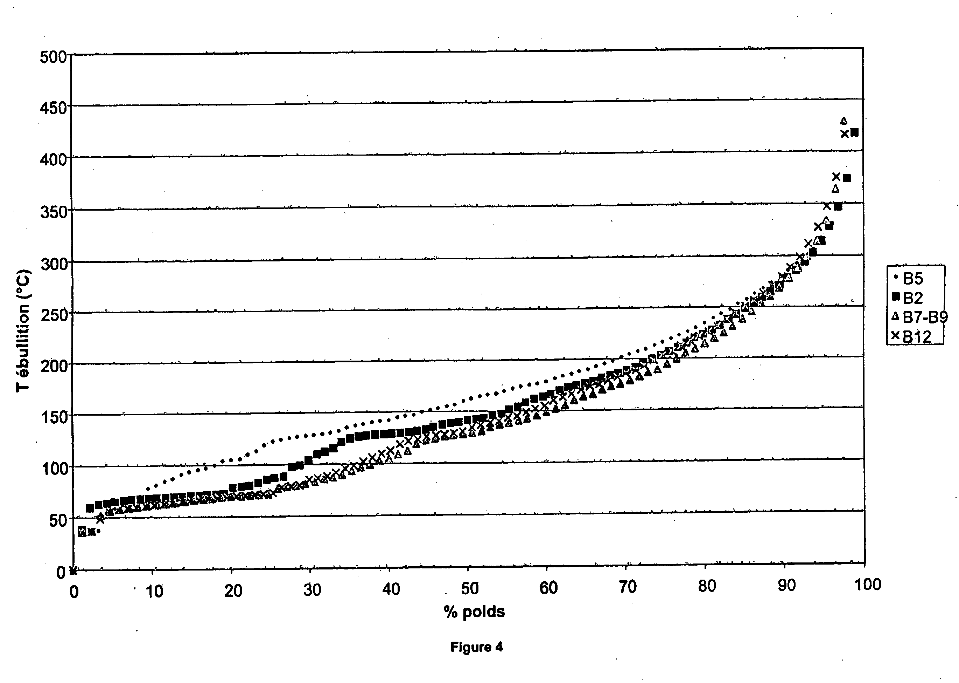

La courbe de distillation simulée donnée à la Figure 4 indique la distribution en terme de température d'ébullition et de rendement sur les produit formés. Cette courbe montre que des produits dans l'intervalle de distillation de l'essence et du gazole sont réalisés par ce procédé. Les différentes courbes représentent les distillations simulées des recettes organiques correspondants aux différents bilans du tableau 3. On constate ainsi par exemple que dans le cas des bilans 7 et 9 que 40% de la fraction hydrocarbure a une température d'ébullition supérieure à 150°C.

### Exemple 3 (selon l'invention)

On a réalisé une simulation du procédé mettant en oeuvre une étape de recyclage de la phase gazeuse séparée.

De la même façon que dans l'exemple précédent, le catalyseur utilisé est le solide commercial IS463 (également désigné par sa dénomination interne : GOD200).

La charge d'éthanol est d'abord flashée à 20°C sous 3 MPa, puis chauffée à 400°C. On effectue la déshydratation de l'éthanol en éthylène, jusqu'à un taux d'avancement de la réaction égal à 97 % et la réaction d'oligomérisation avec un taux d'avancement de la conversion de l'éthylène égal à 40 % par passe.

Les composés en C4+ recyclés s'oligomérisent ou sont additionnés avec l'éthylène présent, avec une distribution de produits comparable à la réaction sans recyclage. Après baisse de la température après réaction, à une température comprise entre 50 et 200°C, Le mélange réactionnel est séparé en trois phases (aqueuse, hydrocarbures et gaz) à 3 MPa.

Le Tableau 4 ci-dessous donne l'évolution des rendements en essence et en gazole en fonction de la température du séparateur, en considérant une purge très faible, fixée à 0,1 % en masse de la boucle de recyclage.

**Tableau 4**

| T séparateur (°C) | 100 | 110 | 120 | 130 | 140 | 150 | 160 | 170 | 180 |
|---|---|---|---|---|---|---|---|---|---|
| Recycle | 2,0 | 2,1 | 2,3 | 2,4 | 2,6 | 2,8 | 3,0 | 3,4 | 3,9 |
| Rdt essence (%) | 28 | 28 | 28 | 28 | 28 | 28 | 27 | 27 | 26 |
| Rdt gazole (%) | 23 | 23 | 24 | 25 | 26 | 27 | 28 | 29 | 31 |
| Rdt liquide (%) | 50 | 51 | 52 | 53 | 54 | 55 | 55 | 56 | 57 |
| T séparateur (°C) | 190 | 200 | 210 | 220 | | | | | |
| Recycle | 4,7 | 6,1 | 8,9 | 17,5 | | | | | |
| Rdt essence (%) | 24 | 21 | 17 | 10 | | | | | |
| Rdt gazole (%) | 34 | 37 | 42 | 49 | | | | | |
| Rdt liquide (%) | 58 | 58 | 59 | 59 | | | | | |

D'après ces valeurs, on constate que la quantité de gazole obtenue augmente de façon importante avec le taux de recycle.

Simplement pour avoir un ordre de grandeur concernant la production de gazole, à supposer que l'on peut travailler avec une quantité disponible d'éthanol de l'ordre de 200 000 tonnes/an, dans ces conditions à une température de 200°C (recycle égal à 6), on atteindrait un rendement en gazole de l'ordre de 74 000 tonnes/an et 42 500 tonnes/an d'essence, le reste étant une production d'eau.

## Revendications

1. Procédé de transformation de l'éthanol en base pour carburant diesel, **caractérisé en ce qu'**il comprend :
- une seule étape réactionnelle (a) de mise en contact de l'éthanol avec un catalyseur acide, amorphe ou structuré, majoritairement mésoporeux, c'est-à-dire comprenant au moins 60% de pores de taille comprise entre 2 et 50 nm, choisi dans le groupe formé par les alumines delta, gamma et êta et les silices-alumines, menée à une température de 300 à 500°C, sous une pression de 2 à 10 MPa et sous une pph de 0,2 à 4 h-¹ et produisant une phase gazeuse, une phase liquide organique et une phase liquide aqueuse ; et
- une étape de séparation (b) de ladite phase gazeuse, ladite phase liquide organique et ladite phase liquide aqueuse.

2. Procédé selon la revendication 1 dans lequel ledit catalyseur est une alumine gamma ou delta de surface externe comprise entre 130 et 350 m²/g et de volume poreux, mesuré par l'intrusion au mercure, situé entre 0,3 et 1,2 cm³/g.

3. Procédé selon la revendication 1 dans lequel ledit catalyseur est une silice-alumine amorphe, ayant un taux de silice entre 10 et 90 % en masse et possédant une surface externe de 200 à 480 m²/g (mesure SBET).

4. Procédé selon la revendication 3 dans lequel ladite silice-alumine présente un volume poreux, mesuré par l'intrusion au mercure, compris entre 0,5 et 1,5 cm³/g.

5. Procédé selon l'une des revendications 1 à 4 incluant une étape de régénération du catalyseur.

6. Procédé selon la revendication 5 dans lequel la régénération est réalisée sous flux d'air à une pression entre la pression atmosphérique et la pression de réaction et à une température choisie entre 400 et 600°C.

7. Procédé selon l'une des revendications 1 à 6 dans lequel l'étape (b) de séparation de ladite phase gazeuse, ladite phase liquide organique et ladite phase liquide aqueuse est effectuée à une pression voisine de la pression de réaction.

8. Procédé selon l'une des revendications 1 à 7 dans lequel au moins une partie de la phase gazeuse séparée à l'étape (b) est recyclée à l'entrée de l'étape (a).

9. Procédé selon l'une des revendications 1 à 8 dans lequel au moins une partie de l'effluent liquide organique de l'étape de séparation (b) est soumis à une hydrogénation.

10. Procédé selon la revendication 9 dans lequel l'hydrogénation est réalisée par contact avec un gaz riche en hydrogène sur un catalyseur contenant un métal du groupe VIII, sur un support de type alumine, silice ou silice-alumine, à une WH de 1 à 8 h⁻¹, une température entre 100 et 250°C en entrée du réacteur et une pression opératoire comprise entre 2 et 5 MPa.

11. Procédé selon la revendication 10 dans lequel ledit catalyseur comprend de 0,1 à 10 % en masse de palladium.

12. Procédé selon la revendication 10 dans lequel ledit catalyseur comprend de 1 à 60 % en masse de nickel.

## Claims

1. A method of converting ethanol to a base stock for diesel fuel, **characterized in that** it comprises:
- a single reaction stage (a) of contacting the ethanol with an acid catalyst, amorphous or structured, predominantly mesoporous, i.e. comprising at least 60 % pores whose size ranges between 2 and 50 nm, selected from the group consisting of delta, gamma and eta aluminas and silica-aluminas, carried out at a temperature ranging between 300°C and 500°C, at a pressure ranging between 2 and 10 MPa and at a WHSV of 0.2 to 4 h⁻¹, and producing a gas phase, an organic liquid phase and an aqueous liquid phase, and
- a stage (b) of separating said gas phase, said organic liquid phase and said aqueous liquid phase.

2. A method as claimed in claim 1, wherein said catalyst is a gamma or delta alumina of external surface area ranging between 130 and 350 m²/g and of pore volume, measured by mercury intrusion, ranging between 0.3 and 1.2 cm³/g.

3. A method as claimed in claim 1, wherein said catalyst is an amorphous silica-alumina with a silica ratio ranging between 10 and 90 % by mass and an external surface area ranging between 200 and 480 m²/g (SBET measuremcnt).

4. A method as claimed in claim 3, wherein said silica-alumina has a pore volume, measured by mercury intrusion, ranging between 0.5 and 1.5 em³/g.

5. A method as claimed in any one of claims 1 to 4, involving a catalyst regeneration stage.

6. A method as claimed in claim 5, wherein regeneration is performed in an air stream at a pressure ranging between the atmospheric pressure and the reaction pressure, and at a temperature selected between 400°C and 600°C.

7. A method as claimed in any one of claims 1 to 6, wherein stage (b) of separating said gas phase, said organic liquid phase and said aqueous liquid phase is carried out at a pressure close to the reaction pressure.

8. A method as claimed in any one of claims 1 to 7, wherein at least part of the gas phase separated in stage (b) is recycled to the inlet of stage (a).

9. A method as claimed in any one of claims 1 to 8, wherein at least part of the organic liquid effluent from separation stage (b) undergoes hydrogenation.

10. A method as claimed in claim 9, wherein hydrogenation is carried out by contact with a hydrogen-rich gas over a catalyst containing a metal from group VIII, an alumina, silica or silica-alumina type support, at a LHSV of 1 to 8 h⁻¹, at a temperature ranging between 100°C and 250°C at the reactor inlet and at an operating pressure ranging between 2 and 5 MPa.

11. A method as claimed in claim 10, wherein said catalyst comprises 0.1 to 10 % by mass of palladium.

12. A method as claimed in claim 10, wherein said catalyst comprises I to 60 % by mass of nickel.

## Patentansprüche

1. Verfahren zur Umwandlung von Ethanol in eine Grundlage für Dieselkraftstoff, **dadurch gekennzeichnet, dass** es Folgendes umfasst:
- einen einzigen Reaktionsschritt (a), in weichem Ethanol mit einem sauren Katalysator in Kontakt gebracht wird, der amorph oder strukturiert und überwiegend mesoporös ist, d.h. mindestens 60 % an Poren mit einer Größe im Bereich von 2 bis 50 nm umfasst, ausgewählt aus der Gruppe, die von den delta-, gamma- und eta-Aluminiumoxiden und den Siliciumdioxid-Aluminiumoxiden gebildet wird, wobei der Schritt bei einer Temperatur von 300 bis 500 °C, bei einem Druck von 2 bis 10 MPa und einem relativen Massendurchsatz (pro Stunde) von 0,2 bis 4 h⁻¹ durchgeführt wird und wobei eine Gasphase, eine flüssige organische Phase und eine wässrige flüssige Phase erzeugt werden; und
- einen Schritt (b), in welchem die gasförmige Phase, die organische flüssige Phase und die wässrige flüssige Phase getrennt werden.

2. Verfahren nach Anspruch 1, wobei der Katalysator ein gamma- oder delta-Aluminiumoxid mit einer äußeren Oberfläche im Bereich von 130 und 350 m²/g und einem Porenvolumen, gemessen mittels Quecksilbereinleitung, im Bereich von 0,3 bis 1,2 cm³/g ist

3. Verfahren nach Anspruch 1, wobei der Katalysator ein amorphes Siliciumdioxid-Aluminiumoxid ist, das einen Siliciumdioxidgehalt von 10 bis 90 Gewichts-% hat und eine äußere Oberfläche von 200 bis 480 m²/g (SBET-Messung) besitzt.

4. Verfahren gemäß dem Anspruch 3, wobei das Siliciumdioxid-Aluminiumoxid ein Porenvolumen, gemessen durch Quecksilbereinleitung, im Bereich von 0,5 bis 1,5 cm³/g aufweist.

5. Verfahren nach einem der Ansprüche 1 bis 4, wobei es einen Schritt der Regenerierung des Katalysators umfasst.

6. Verfahren nach Anspruch 5, wobei die Regenerierung unter einem Luftstrom bei einem Druck durchgeführt wird, der zwischen dem Atmosphärendruck und dem Reaktionsdruck liegt, sowie bei einer Temperatur, die zwischen 400 und 600 °C gewählt wird.

7. Verfahren nach einem der Ansprüche 1 bis 6, wobei der Schritt (b) des Trennens der gasförmigen Phase, der organischen flüssigen Phase und der wässrigen flüssigen Phase bei einem Druck durchgeführt wird, der nahe dem Reaktionsdruck liegt.

8. Verfahren nach einem der Ansprüche 1 bis 7, wobei mindestens ein Teil der gasförmigen Phase, die in Schritt (b) abgetrennt wird, an den Anfangspunkt des Schrittes (a) zurückgeführt wird.

9. Verfahren nach einem der Ansprüche 1 bis 8, wobei mindestens ein Teil des organischen flüssigen Stoffstroms des Trennschrittes (b) einer Hydrierung unterzogen wird.

10. Verfahren nach Anspruch 9, wobei die Hydrierung durch Kontakt mit einem wasserstoffreichen Gas an einem Katalysator durchgeführt wird, der ein Metall der Gruppe VIII auf einem Träger des Typs Aluminiumoxid, Siliciumdioxid oder Siliciumdioxid-Aluminiumoxid enthält, und zwar bei einem relativen Volumendurchsatz (pro Stunde) von 1 bis 8 h⁻¹ einer Temperatur zwischen 100 und 250 °C an der Eintrittsöffnung des Reaktors und einem Betriebsdruck im Bereich von 2 bis 5 MPa.

11. Verfahren nach Anspruch 10, wobei der Katalysator 0,1 bis 10 Gewichts% an Palladium umfasst.

12. Verfahren nach Anspruch 10, wobei der Katalysator 1 bis 60 Gewichts% an Nickel umfasst.
